# EUROPÄISCHE PATENTANMELDUNG

(11) **EP 4 560 799 A1**
(43) Veröffentlichungstag der Anmeldung: **28.05.2025**
(21) Anmeldenummer: 23212233.3
(22) Anmeldetag: 27.11.2023
(51) Int. Cl.: H01M 50/166, H01M 50/172, H01M 50/533

(54) **ISOLATIONSEINHEIT UND VERFAHREN ZUM HERSTELLEN VON BATTERIEZELLEN**

(71) Anmelder: Cellforce Group GmbH, 72138 Kirchentellinsfurt (DE)
(72) Erfinder: Gräf, Jürgen, 72138 Kirchentellinsfurt (DE); Steiner, Philipp, 72138 Kirchentellinsfurt (DE)
(74) Vertreter: Müller Schupfner & Partner Patent- und Rechtsanwaltspartnerschaft mbB (Muc)

(57) **Zusammenfassung**

Die Erfindung betrifft eine Isolationseinheit, welche für den Einbau in einer Zelldeckelanordnung eingerichtet ist, aufweisend ein Basisabschnitt mit einem Aufnahmebereich, wobei der Aufnahmebereich dazu eingerichtet ist, mindestens einen Ableiter von mindestens einem Zellstapel, insbesondere in zumindest bereichsweise gebogener Form, aufzunehmen, wobei der Aufnahmebereich entlang einer Höhenrichtung randseitig durch mindestens ein Stützelement begrenzt ist, welches sich in Längenrichtung vom Basisabschnitt aus erstreckt, und wobei der Aufnahmebereich entlang einer Tiefenrichtung zumindest bereichsweise durch randseitige Seitenabschnitte begrenzbar ist. Des Weiteren betrifft die Erfindung eine Zelldeckelanordnung und ein Verfahren zum Herstellen von Batteriezellen.

## Beschreibung

Die Erfindung betrifft eine Isolationseinheit, welche für den Einbau in einer Zelldeckelanordnung eingerichtet ist und einen Basisabschnitt aufweist. Des Weiteren betrifft die Erfindung eine Zelldeckelanordnung sowie ein Verfahren zum Herstellen von Batteriezellen.

Die Herstellung von sogenannten prismatischen Batteriezellen erfordert ein Zusammenwirken von einer Vielzahl unterschiedlicher Komponenten mit unterschiedlichen elektrischen Ladungen. Neben einer Vielzahl von Elektroden (Anoden und Kathoden), die durch mikroporöse Separatoren voneinander getrennt sind, um einen Zellstapel auszubilden, werden die jeweiligen Elektroden üblicherweise über Zelldeckel und Kollektorplatten aus den Batteriezellen geführt.

Die jeweiligen innenliegenden Kollektorplatten sind mit außenliegenden Terminalplatten elektrisch leitend verbunden sein, um ein elektrisches Anbinden der Batteriezelle zu ermöglichen. Üblicherweise werden die äußeren Komponenten der Batteriezelle in einer Hardcase-Ausführung, insbesondere der Zelldeckel und das Zellgehäuse, aus einem Metall, wie Aluminium, hergestellt. Hierdurch entsteht die Notwendigkeit, die jeweiligen Kollektorplatten, Terminalplatten und Ableiterfolien elektrisch gegenüber den äußeren Komponenten, wie dem Gehäuse der Batteriezelle, zu isolieren.

Problematisch bei den derzeitigen Herstellungsverfahren von Batteriezellen ist, dass die jeweiligen Ableiterfolien der Elektroden bei einem Verschließen des Zellgehäuses mit einem Zelldeckel gefaltet oder gebogen werden und dabei im Faltbereich oder Biegebereich an dem Zelldeckel oder dem Zellgehäuse reiben können. Hierdurch kann eine elektrisch leitende Verbindung zwischen den Ableitern und den äußeren Komponenten der Batteriezelle entstehen, die ein potentialfreies Ausbilden des Zellgehäuses verhindert und das Risiko für einen Kurzschluss erhöhen kann.

Die vorliegende Erfindung hat daher die Aufgabe, eine Isolationseinheit, eine Zelldeckelanordnung mit einer derartigen Isolationseinheit und ein Verfahren zum Herstellen von Batteriezellen zu schaffen, welche die Gefahr einer Beschädigung von Ableitern durch einen Zusammenbau von Batteriezellen reduzieren kann. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird eine Isolationseinheit bereitgestellt. Die Isolationseinheit ist für den Einbau in einer Zelldeckelanordnung eingerichtet und weist einen Basisabschnitt mit einem Aufnahmebereich auf. Der Aufnahmebereich ist dazu eingerichtet, mindestens einen Ableiter von mindestens einem Zellstapel, insbesondere in zumindest bereichsweise gefalteter oder gebogener Form, aufzunehmen. Der Aufnahmebereich kann als ein Volumen oder eine Fläche ausgebildet sein, welche an den Basisabschnitt angrenzt.

Der Aufnahmebereich kann gemäß einer Ausführungsform entlang einer Höhenrichtung randseitig durch mindestens ein Stützelement begrenzt sein, welches sich in Längenrichtung vom Basisabschnitt aus erstreckt. Somit kann das mindestens eine Stützelement neben dem Aufnahmebereich positioniert sein und je nach Ausgestaltung auch den Aufnahmebereich randseitig begrenzen.

Der Aufnahmebereich ist erfindungsgemäß zumindest entlang einer Tiefenrichtung zumindest bereichsweise durch randseitige Seitenabschnitte begrenzbar. Durch die Verwendung von randseitig angeordneten Seitenabschnitten können in den Aufnahmebereich hineinragende und innerhalb des Aufnahmebereichs gefaltete oder gebogene Ableiter seitlich geschützt und elektrisch isoliert werden.

Vorteilhafterweise ist die Isolationseinheit einteilig oder mehrteilig aus einem oder mehreren elektrisch isolierenden Materialien ausgebildet. Dabei kann die Isolationseinheit durch 3D-Druck-Verfahren, Spritzguss-Verfahren und dergleichen hergestellt werden.

Die Tiefenrichtung kann beispielsweise als eine Richtung entlang einer schmalen oder schmalsten Seite der Isolationseinheit definiert sein. Senkrecht zu der Tiefenrichtung erstreckt sich die Höhenrichtung, welche einer länglichen Ausdehnung der Seitenabschnitte entspricht bzw. parallel zu diesen verläuft. Somit kann sich der Basisabschnitt im Wesentlichen entlang der Tiefenrichtung und der Höhenrichtung flächig ausdehnen. Die Längenrichtung kann analog zu einer Flächennormale des Basisabschnitts definiert sein. Dabei können die Seitenabschnitte in gefalteter oder fester Form in Längenrichtung vom Basisabschnitt abstehen und somit einen Aufnahmeabschnitt in Form eines Volumens begrenzen oder definieren.

Die Verwendung von Seitenabschnitten, welche beispielsweise als Seitenlaschen oder Seitenwände ausgestaltet sein können, ermöglicht einen zusätzlichen Schutz der mechanisch empfindlichen Kollektorfolien bzw. Ableiter. Weiterhin bieten die Seitenabschnitte eine zusätzliche elektrische Isolierung der Ableiter gegenüber dem Zellgehäuse.

Die Seitenabschnitte können besonders effizient die Ableiter schützen, wenn diese den Aufnahmebereich einseitig oder beidseitig begrenzen und entlang der Längenrichtung von dem Basisabschnitt abstehen.

Die Ableiter können hierbei in Form von Ableiterbündeln, in Form einer Ableiterverlängerung, in Form von Gruppen von Ableitern und dergleichen vorliegen und innerhalb des Aufnahmebereichs gefaltet oder gebogen werden, um einen Platzbedarf in einem Zellgehäuse zwischen mindestens einem Zellstapel und einem Zelldeckel zu minimieren.

Gemäß einem weiteren Ausführungsbeispiel stehen die Seitenabschnitte entlang der Tiefenrichtung von dem Basisabschnitt ab oder verlängern den Basisabschnitt entlang der Tiefenrichtung. Vorteilhafterweise sind die Seitenabschnitte faltbar mit dem Basisabschnitt verbunden. Durch diese Maßnahme kann die gesamte Isolationseinheit nahezu flach und dadurch technisch besonders einfach gefertigt werden. Der Aufnahmebereich wird bei dieser Ausgestaltung durch ein Verbiegen oder Verformen der Seitenabschnitte ausgebildet, wobei die Seitenabschnitte nach dem Verbiegen oder Verformen in Längenrichtung von dem Basisabschnitt abstehen können.

Je nach Ausgestaltung können die Seitenabschnitte elastisch federnd mit dem Basisabschnitt verbunden sein. Hierdurch können die Seitenabschnitte im in ein Zellgehäuse eingesetzten Zustand durch eine Federkraft voneinander weg gegen die Wandungen des Zellgehäuses gedrückt werden, um den Aufnahmebereich für die Ableiter zu maximieren.

Die Seitenabschnitte können besonders präzise gefaltet werden, wenn diese entlang einer Falz oder Perforierung, beispielsweise in Form eines Filmscharniers, faltbar mit dem Basisabschnitt verbunden sind. Vorteilhafterweise sind die Seitenabschnitte entlang der Falz oder Perforierung in einem Winkel zwischen 1° und 180° faltbar ausgestaltet. Hierdurch können die Seitenabschnitte besonders flexibel und integral mit dem Basisabschnitt hergestellt werden.

Nach einer weiteren Ausführungsform ist der Aufnahmebereich entlang der Höhenrichtung randseitig durch mindestens ein Stützelement begrenzt. Vorteilhafterweise können die Stützelemente die Seitenabschnitte in einem gefalteten Zustand derart abstützen, dass diese nicht in den Aufnahmebereich hineinragen oder hineinfallen können. Bei einer alternativen Ausgestaltung können die Seitenelemente an den Stützelementen vorbei schwenken oder bewegt werden, sodass keine gegenseitige Beeinträchtigung vorliegt.

Die im Aufnahmebereich angeordneten Ableiter können auch bei mehrfacher Faltung oder Biegung optimal geschützt werden, wenn die Seitenabschnitte zumindest an zwei einander gegenüberliegenden Rändern des Basisabschnitts angeordnet sind.

Gemäß einem weiteren Ausführungsbeispiel weisen die Seitenabschnitte im gefalteten Zustand eine Ausdehnung entlang der Längenrichtung auf, welche einer Ausdehnung des mindestens einen Stützelements in Längenrichtung entspricht oder diese überragt. Diese Maßnahme kann die Herstellung der Isolationseinheit vereinfachen oder an die Geometrie des vorhandenen Raums im Zellgehäuse anpassen.

Die Isolationseinheit kann an den Einbau in einer Zelldeckelanordnung optimiert werden, wenn der Basisabschnitt mindestens eine Öffnung und/oder mindestens eine Vertiefung aufweist. Vorteilhafterweise ist die Vertiefung dazu eingerichtet, zumindest bereichsweise eine Kollektorplatte aufzunehmen. Die mindestens eine Öffnung kann die Vertiefung oder den Aufnahmebereich mit einer gegenüberliegenden Seite der Isolationseinheit verbinden. Hierdurch kann die Kollektorplatte beispielsweise über Verbindungsstifte oder Verbindungselemente mit einer Terminalplatte bzw. einem außenliegenden Batteriepol gekoppelt werden. Auch kann durch die Öffnung hierdurch ein Niet oder eine Verschraubung ausgebildet werden.

Nach einem weiteren Aspekt der Erfindung wird eine Zelldeckelanordnung bereitgestellt. Die Zelldeckelanordnung weist mindestens eine außenseitig angeordnete Terminalplatte, eine innenseitig angeordnete Kollektorplatte, einen Zelldeckel und eine erfindungsgemäße Isolationseinheit auf. Hierbei sind die Begriffe außenseitig und innenseitig auf eine spätere Einbauposition in einer Batteriezelle bezogen. Wird die Zelldeckelanordnung als Bestandteil der Batteriezelle verbaut, so kann die Terminalplatte außenseitig bzw. außerhalb eines Innenvolumens des Zellgehäuses und die Kollektorplatte innerhalb des Innenvolumens des Zellgehäuses positioniert sein. Somit ist auch der Aufnahmeabschnitt der Isolationseinheit innenseitig angeordnet.

Die Kollektorplatte ist flächig auf einem Basisabschnitt der Isolationseinheit positioniert. Eine dem Aufnahmeabschnitt entgegen gerichtete Seite des Basisabschnitts ist, insbesondere innenseitig, an dem Zelldeckel angeordnet. Außenseitig ist die Terminalplatte direkt oder indirekt an dem Zelldeckel angeordnet. Bei einer indirekten Anordnung der Terminalplatte kann diese gegenüber dem Zelldeckel isoliert bzw. elektrisch isoliert angebracht sein, wodurch eine potentialfreie Ausführung des Zelldeckels möglich ist.

Die Begriffe Terminalplatte und Kollektorplatte sind im Sinne der vorliegenden Beschreibung nicht auf eine bestimmte Form beschränkt. Insbesondere können die Terminalplatte und Kollektorplatte einander gleichen oder unterschiedlich voneinander geformt sein. Dabei können diese auch aus unterschiedlichen oder gleichen Materialien hergestellt sein.

Je nach Ausgestaltung können die Terminalplatte und Kollektorplatte plattenförmig, abgestuft, L-förmig gebogen oder eine beliebige zweidimensionale oder dreidimensionale Form aufweisen, um für die Ausbildung der Zelldeckelanordnung geeignet zu sein. Beispielsweise können die Terminalplatte und Kollektorplatte Öffnungen oder Vertiefungen aufweisen, um Verbindungsmittel, wie beispielsweise Nieten, Verschraubungen, Verbindungsstifte und dergleichen, einzubringen. Dabei können die Terminalplatte und Kollektorplatte runde bzw. kreisförmige, ovale, quadratische oder beliebige vieleckige Querschnittsformen aufweisen.

Die Terminalplatte ist vorteilhafterweise in Längenrichtung durch den Zelldeckel und die Basiseinheit hindurch elektrisch leitend mit der Kollektorplatte verbunden. Dies kann beispielsweise mit Hilfe von elektrisch leitenden Verbindungsmitteln oder unmittelbar erfolgen, wenn die Terminalplatte und die Kollektorplatte sich nach dem Einsetzen in die Zelldeckelanordnung zumindest bereichsweise berühren können oder durch einen Verfahrensschritt zueinander hin gebogen oder gestanzt werden.

Gemäß einem weiteren Aspekt der Erfindung wird ein Verfahren zur Herstellen einer Batteriezelle mit mindestens einer erfindungsgemäßen Zelldeckelanordnung bereitgestellt. In einem Schritt wird mindestens ein Zellstapel mit in Längenrichtung endseitig abstehenden Ableitern bereitgestellt. Dabei können die Ableiter einseitig oder zumindest zweiseitig von dem Zellstapel abstehen. Beispielsweise können mehrere Ableiter eines oder mehrerer Elektroden bzw. Pole an einer gemeinsamen Seite des Zellstapels abstehen oder an einander gegenüberliegenden Seiten des Zellstapels von diesem abstehen.

Die jeweiligen Ableiter werden mit jeweils mindestens einer Kollektorplatte mindestens einer Zelldeckelanordnung direkt oder indirekt elektrisch leitend verbunden. Bei einer indirekten Verbindung der Ableiter können die Ableiter mit Hilfe von Ableiterverlängerungen oder anderen Hilfsabschnitten mit den Kollektorplatten elektrisch leitend gekoppelt werden.

Die Ableiterbündel werden in einem weiteren Schritt vor oder nach einem Einbringen des Zellstapels in ein Zellgehäuse mit einer Kollektorplatte mindestens einer Zelldeckelanordnung verbunden. Die mindestens eine Zelldeckelanordnung wird vorteilhafterweise dazu eingesetzt, mindestens eine Öffnung des Zellgehäuses zumindest bereichsweise zu verschließen. Bei einem Verschließen der Öffnung des Zellgehäuses werden die mit den Kollektorplatten verbundenen Ableiter gebogen oder gefaltet. Dabei werden die Ableiterbündel beim Biegen durch mindestens einen Seitenabschnitt der Isolationseinheit geführt und zumindest bereichsweise von dem Zellgehäuse beabstandet.

Durch das Verfahren können Batteriezellen, beispielsweise in Form von Lithium-Ionen-Batteriezellen, hergestellt werden, welche ein geringeres Risiko für Beschädigungen der Ableiter bei der Montage bzw. Herstellung aufweisen. Dies kann insbesondere durch die erfindungsgemäße Isolationseinheit und die Seitenabschnitte realisiert werden.

Bei einem Ausführungsbeispiel sind durch eine elektrisch leitende Verbindung zwischen der Terminalplatte und der Kollektorplatte der Zelldeckel und die Isolationseinheit mechanisch miteinander verpresst ausgestaltet. Hierdurch kann die gesamte Zelldeckelanordnung mit Hilfe der Verbindung zwischen der mindestens einen Terminalplatte und Kollektorplatte, beispielsweise entlang der Längenrichtung, verpresst und zu einer zusammenhängenden Einheit geformt werden. Somit kann die weitere Montage der Zelldeckelanordnung technisch vereinfacht werden.

Die Kollektorplatte kann besonders platzsparend angeordnet werden, wenn diese in einem Aufnahmeabschnitt und/oder einer Vertiefung des Basisabschnitts der Isolationseinheit angeordnet ist. Durch diese Maßnahme kann die Ausdehnung der Zelldeckelanordnung in Längenrichtung reduziert werden.

Gemäß einer weiteren Ausführungsform ist die Kollektorplatte dazu eingerichtet, mindestens eine biegbare oder gebogene Ableiterverlängerung oder mindestens ein biegbares oder gebogenes Ableiterbündel elektrisch zu kontaktieren, wobei die Ableiterverlängerung oder das Ableiterbündel in einem gebogenen Zustand innerhalb des Aufnahmeabschnitts der Isolationseinheit angeordnet ist. Bevorzugterweise sind die Ableiterverlängerung oder das Ableiterbündel entlang eines Biegebereichs biegbar ausgestaltet oder gebogen. Durch diese Maßnahme kann der mindestens eine Seitenabschnitte der Isolationseinheit schützend wirken und die Ableiter, beispielsweise in Form von Ableiterbündeln oder Ableiterverlängerungen und dergleichen, insbesondere im Biegebereich gegenüber dem Zellgehäuse beabstanden.

Ein Reiben oder Kratzen der Ableiter am Zellgehäuse kann unterbunden werden, wenn mindestens ein Seitenabschnitt der Isolationseinheit dazu eingerichtet ist, mindestens einen Biegebereich der Ableiterverlängerung oder des Ableiterbündels innerhalb des Aufnahmeabschnitts zumindest randseitig zu führen.

Nachstehend werden mehrere Ausführungsbeispiele der Erfindung anhand der Zeichnungen näher erläutert. Es zeigen:
Fig. 1 eine perspektivische Darstellung einer erfindungsgemäßen Isolationseinheit mit faltbaren Seitenabschnitten gemäß einer Ausführungsform der Erfindung,
Fig. 2 eine perspektivische Darstellung der Isolationseinheit aus Fig. 2 mit gefalteten Seitenabschnitten,
Fig. 3 eine Schnittdarstellung einer Batteriezelle zum Veranschaulichen von erfindungsgemäßen Zelldeckelanordnungen gemäß einer Ausführungsform, und
Fig. 4 ein schematisches Ablaufdiagramm zum Verdeutlichen eines Verfahrens zum Herstellen von Batteriezellen gemäß einer Ausführungsform der Erfindung.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

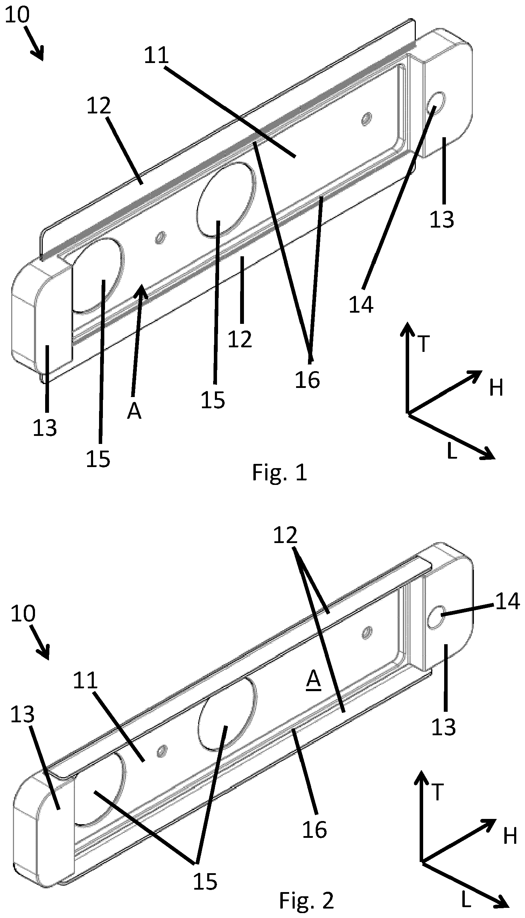

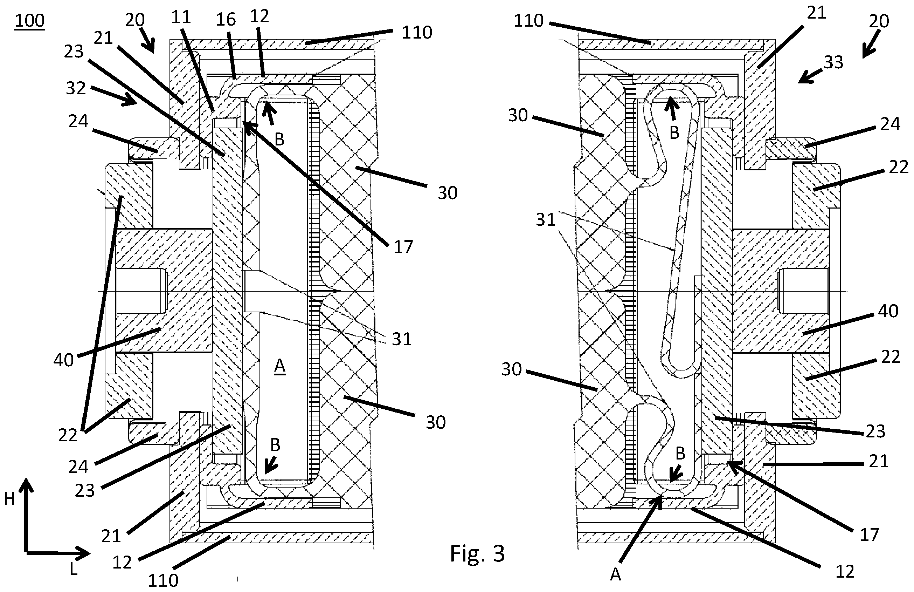

Die Fig. 1 zeigt eine perspektivische Darstellung einer erfindungsgemäßen Isolationseinheit 10 mit faltbaren Seitenabschnitten 12 gemäß einer Ausführungsform der Erfindung. Die Isolationseinheit 10 ist für den Einbau in einer Zelldeckelanordnung 20 eingerichtet, welche in der Fig. 3 gezeigt ist.

Die Isolationseinheit 10 weist einen Basisabschnitt 11 mit einem Aufnahmebereich A auf. Der Aufnahmebereich A ist dazu eingerichtet, mindestens einen Ableiter 31 von mindestens einem Zellstapel 30, insbesondere in zumindest bereichsweise gefalteter oder gebogener Form, aufzunehmen. Die Ableiter 31 können in Form von Ableiterfolien vorgesehen sein.

Der Aufnahmebereich A kann als ein Volumen oder eine Fläche ausgebildet sein, welche an den Basisabschnitt 11 entlang einer Längenrichtung L angrenzt. Im dargestellten Ausführungsbeispiel ist der Aufnahmebereich A entlang einer Höhenrichtung H randseitig durch jeweils ein Stützelement 13 begrenzt, welches sich in Längenrichtung L vom Basisabschnitt 11 aus erstreckt.

Die Stützelemente 13 können hierbei verschiedene Funktionen erfüllen und sind optional vorgesehen. Beispielsweise können die Stützelemente 13 einen minimalen Abstand in Längenrichtung L gegenüber einem Zellstapel 30 sicherstellen.

Beispielhaft weist ein Stützelement 13 eine Öffnung 14 auf, welche zum Befüllen der Batteriezelle 100 mit einem Elektrolyt genutzt werden kann. Auch das Basiselement 11 weist Öffnungen 15 auf, welche im Rahmen der Beschreibung zur Fig. 3 näher erläutert werden.

Der Aufnahmebereich A ist entlang einer Tiefenrichtung T zumindest bereichsweise durch randseitige Seitenabschnitte 12 begrenzbar. Durch die Verwendung von randseitig angeordneten Seitenabschnitten 12 können in den Aufnahmebereich A hineinragende und innerhalb des Aufnahmebereichs A gefaltete oder gebogene Ableiter 31 seitlich geschützt und elektrisch isoliert werden.

Im dargestellten Ausführungsbeispiel ist die Isolationseinheit 10 einteilig aus einem elektrisch isolierenden Material hergestellt.

Die Richtungsangaben Tiefenrichtung T, Längenrichtung L und Höhenrichtung H beziehen sich im Wesentlichen auf die in Fig. 3 gezeigte Batteriezelle 100 als Referenz und legen die Verbauposition der Isolationseinheit 10 innerhalb der Batteriezelle 100 nahe.

Vorzugsweise können die Ableiter 31 des Zellstapels 30 entlang einer Biegeachse oder Faltachse verformt werden, welche parallel zu der Höhenrichtung H verläuft sodass die Seitenabschnitte 12 derartige Biegebereiche B besonders optimal schützen können. Bevorzugterweise sind die Seitenabschnitte 12 derart auf dem Basisabschnitt 11 angeordnet, dass diese einen oder mehrere Biegebereiche B von Ableitern 31 flächig stützen und/oder führen können.

Dabei sind die Seitenabschnitte 12 als biegbare oder faltbare Seitenlaschen ausgestaltet, welche initial bzw. nach einer Herstellung der Isolationseinheit 10 in Tiefenrichtung T beidseitig von dem Basisabschnitt 11 abstehen bzw. den Basisabschnitt 11 in Tiefenrichtung T verlängern. Durch diese Maßnahme kann die gesamte Isolationseinheit 10 nahezu flach und dadurch technisch besonders einfach gefertigt werden. Der Aufnahmebereich kann bei dieser Ausgestaltung durch ein Verbiegen oder Verformen der Seitenabschnitte 12 ausgebildet, wobei die Seitenabschnitte 12 nach dem Verbiegen oder Verformen in Längenrichtung L von dem Basisabschnitt 11 abstehen.

Die Seitenabschnitte 12 sind entlang einer Falz oder Perforierung 16 faltbar mit dem Basisabschnitt 11 verbunden. Somit können die Seitenabschnitte 12 beispielsweise um einen Winkel von 90° entlang der Perforierung 16 gebogen werden, um den Aufnahmebereich A entlang der Tiefenrichtung T beidseitig zu begrenzen. In der Fig. 1 ist die Isolierungseinheit 10 mit Seitenabschnitten 12 gezeigt, welche nicht gefaltet oder gebogen sind.

In der Fig. 2 ist eine perspektivische Darstellung der Isolationseinheit 10 aus Fig. 1 mit um 90° gefalteten Seitenabschnitten 12 gezeigt. In dieser Form kann die Isolationseinheit 10 in der Batteriezelle 100 und insbesondere in einer Zelldeckelanordnung 20 montiert werden, um die Ableiter 31 zu schützen.

Die Fig. 2 veranschaulicht weiterhin, dass die Seitenabschnitte 12 in ihrem Biegewinkel durch die Stützelemente 13 begrenzt werden, da die Seitenabschnitte 12 eine Ausdehnung in Höhenrichtung H aufweisen, welche einen Abstand zwischen den beiden Stützelementen 13 in Höhenrichtung H überragt. Dieser Abstand zwischen den Stützelementen 13 definiert im gezeigten Ausführungsbeispiel auch die Ausdehnung des Aufnahmebereichs A in Höhenrichtung H. Vorteilhafterweise können die Ableiter 31 ebenfalls eine Ausdehnung und Position entlang der Höhenrichtung H aufweisen, welche der Dimensionierung und Anordnung des Aufnahmebereichs A entspricht.

In der Fig. 3 ist eine Schnittdarstellung einer Batteriezelle 100 zum Veranschaulichen von erfindungsgemäßen Zelldeckelanordnungen 20 gemäß einer Ausführungsform gezeigt. Es sind die beiden Enden bzw. randseitigen Abschnitte der Batteriezelle 100 entlang der Längenrichtung L im Detail gezeigt.

Die Batteriezelle 100 weist zwei Zellstapel 20 auf, welche auf zwei gegenüberliegenden Seiten 32, 33 entlang der Längenrichtung L abstehende Ableiter 31 aufweisen. Eine erste Seite 32 weist hierbei Ableiter 31 zum Ausbilden einer Kathode bzw. eines positiven Batteriepols auf. Eine zweite Seite 33 weist Ableiter 31 zum Ausbilden einer Anode bzw. eines negativen Batteriepols auf. Die erste Seite 32 und die zweite Seite 33 beziehen sich im gezeigten Ausführungsbeispiel auf die Zellstapel 30 und die Batteriezelle 100. Beispielhaft ist an jeder der beiden Seiten 32, 33 eine Zelldeckelanordnung 20 vorgesehen.

Batteriezellen 100 mit auf einer Seite 32, 33 angeordneten beiden Batteriepolen kann auch eine Zelldeckelanordnung 20 montiert werden, welche nebeneinander angeordnete Ableiter 31 der jeweiligen Elektroden elektrisch koppeln kann.

Die Ableiter 31 können in Form von Ableiterbündeln, in Form einer Ableiterverlängerung, in Form von Gruppen von Ableitern 31 und dergleichen vorliegen und innerhalb des Aufnahmebereichs A gefaltet oder gebogen werden, um einen Platzbedarf in einem Zellgehäuse 110 zwischen den Zellstapeln 30 und einem Zelldeckel 21 zu minimieren.

Im gezeigten Ausführungsbeispiel sind beispielhaft zwei Zellstapel 30 vorgesehen, welche entlang der Höhenrichtung H nebeneinander angeordnet sind. Die jeweiligen Ableiter 31 sind zu den Zelldeckelanordnungen 20 geführt und dort elektrisch verbunden.

Die beiden Zelldeckelanordnungen 20 sind beispielsweise gleich ausgeführt, können jedoch je nach Ausgestaltung unterschiedlich geformt sein oder unterschiedliche Komponenten aufweisen.

Die weitere Beschreibung erfolgt der Einfachheit halber mit Bezug auf eine Zelldeckelanordnung 20. Die Zelldeckelanordnung 20 weist eine außenseitig angeordnete Terminalplatte 22, eine innenseitig angeordnete Kollektorplatte 23, einen Zelldeckel 21 und eine Isolationseinheit 10 auf.

Die Terminalplatte 22 kann außenseitig an der Batteriezelle 100 elektrisch kontaktiert werden. Die innenseitig verbaute Kollektorplatte 23 ist dazu eingerichtet, die Ableiter 31 innerhalb des Zellgehäuses 110 elektrisch zu kontaktieren.

Die Kollektorplatte 23 ist flächig in einer Ausnehmung oder Vertiefung 17 des Basisabschnitts 11 der Isolationseinheit 10 positioniert. Eine dem Aufnahmeabschnitt A entgegen gerichtete Seite des Basisabschnitts 11 ist innenseitig an dem Zelldeckel 21 angeordnet. Außenseitig an dem Zelldeckel 21 ist die Terminalplatte 22 angeordnet.

Die Terminalplatte 22 ist dabei durch einen Isolator 24 gegenüber dem Zelldeckel 21 elektrisch isoliert, welcher zwischen dem Zelldeckel 21 und der Terminalplatte 22 angeordnet ist.

Die Terminalplatte 22 ist in Längenrichtung L durch den Zelldeckel 21 und die Basiseinheit 11 hindurch elektrisch leitend mit der Kollektorplatte 23 verbunden. Die elektrische Verbindung erfolgt mit Hilfe von Verbindungsmitteln 40, welche durch die Öffnungen 15 in der Basiseinheit 11 der Isolationseinheit 10 hindurchragen.

Die Verbindungsmittel 40 sind beispielhaft als Nietverbindungen ausgestaltet, welche an den Kollektorplatten 23 verschweißt sind. Die entsprechenden Schweißpunkte sind schematisch angedeutet. Durch die Ausbildung der Verbindungsmittel 40 werden alle Komponenten der Zelldeckelanordnung 20 ortsfest zueinander befestigt. Dabei werden zwischen der Kollektorplatte 23 und der Terminalplatte 22 der Isolator 24, der Zelldeckel 21 und die Isolationseinheit 10 miteinander verbunden. Vorzugsweise erfolgt eine fluiddichte Verpressung unter Ausbildung der Zelldeckelanordnung 20.

Die Fig. 3 verdeutlicht weiterhin unterschiedliche Möglichkeiten die Ableiter 31 gegenüber einem Kontakt mit dem Zellgehäuse 110 durch die Seitenabschnitte 12 der Isolationseinheit 10 zu schützen.

Auf der ersten Seite 32 sind die Ableiter 31 L-förmig gebogen und endseitig mit der Kollektorplatte 23 verschweißt oder verlötet. Dabei können die Ableiter 31 der jeweiligen Zellstapel 30 in Längenrichtung L an den Seitenabschnitten 12 in Richtung des Basisabschnitts 11 geführt werden. An einem Biegebereich B werden die Ableiter 31 gebogen, um parallel auf der Kollektorplatte 23 aufliegen zu können.

Analog zur ersten Seite 32 sind auf der zweiten Seite 33 ebenfalls Ableiter 31 mit der Kollektorplatte 23 elektrisch leitend verbunden. Im Unterschied, sind hier die Ableiter 31 S-förmig entlang Biegebereichen B gefaltet oder gebogen, um innerhalb des Aufnahmebereichs A platziert zu werden. Bei der Montage der Zelldeckelanordnung 20 würden die jeweiligen Ableiter 31 an den Biegebereichen B in Richtung des Zellgehäuses 110 elastisch gedrückt. Diese Interaktion der Ableiter 31 mit dem Zellgehäuse 110 weist ein Beschädigungspotential auf.

Der Einsatz der Isolationseinheit 10 mit den Seitenabschnitten 12 ermöglicht eine Beabstandung der Ableiter 31 gegenüber dem Zellgehäuse 110. Dabei erfolgt eine Relativbewegung und/oder Reibung ausschließlich zwischen den Seitenabschnitten 12 der Isolationseinheit 10 und dem Zellgehäuse 110 bei der Herstellung der Batteriezelle 100. Die Reibung und damit eine Beschädigung der Ableiter 31 der Zellstapel 30 kann somit effektiv verhindert werden.

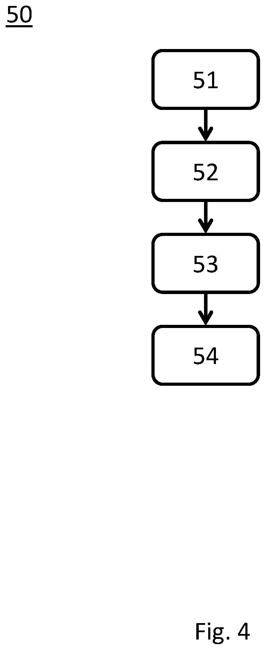

Die Fig. 4 zeigt ein schematisches Ablaufdiagramm zum Verdeutlichen eines Verfahrens 50 zum Herstellen von Batteriezellen 100 gemäß einer Ausführungsform der Erfindung. Beispielhaft wird Bezug auf die in Fig. 3 gezeigte Batteriezelle 100 genommen.

In einem Schritt 51 wird mindestens ein Zellstapel 30 mit in Längenrichtung L endseitig abstehenden Ableitern 31 bereitgestellt. Dabei können die Ableiter 31 einseitig oder zweiseitig von dem Zellstapel 30 abstehen. Beispielsweise können mehrere Ableiter 31 eines oder mehrerer Elektroden bzw. Pole an einer gemeinsamen Seite 32, 33 des Zellstapels 30 abstehen oder an einander gegenüberliegenden Seiten 32, 33 des Zellstapels 30 von dem Zellstapel 30 abstehen.

Die jeweiligen Ableiter 31 werden in einem weiteren Schritt 52 mit jeweils mindestens einer Kollektorplatte 23 mindestens einer Zelldeckelanordnung 20 direkt oder indirekt elektrisch leitend verbunden. Bei einer indirekten Verbindung der Ableiter 31 können die Ableiter 31 mit Hilfe von einer nicht gezeigten Ableiterverlängerungen oder anderen Hilfsabschnitten mit den Kollektorplatten 23 elektrisch leitend gekoppelt werden.

Die Ableiterbündel werden in einem weiteren Schritt vor oder nach einem Einbringen des Zellstapels 30 in ein Zellgehäuse 110 mit einer Kollektorplatte 23 mindestens einer Zelldeckelanordnung verbunden.

Die mindestens eine Zelldeckelanordnung 20 wird dazu eingesetzt, mindestens eine Öffnung des Zellgehäuses 110 zumindest bereichsweise zu verschließen. Bei einem Verschließen 53 der Öffnung des Zellgehäuses 110 werden die mit den Kollektorplatten 23 verbundenen Ableiter 31 gebogen oder gefaltet. Dabei werden die Ableiter 31 in einem Schritt 54 des Verfahrens 50 beim Biegen durch mindestens einen Seitenabschnitt 12 der Isolationseinheit 10 geführt und zumindest bereichsweise von dem Zellgehäuse 110 beabstandet.

## Patentansprüche

1. Isolationseinheit (10), welche für den Einbau in einer Zelldeckelanordnung (20) eingerichtet ist, aufweisend ein Basisabschnitt (11) mit einem Aufnahmebereich (A), wobei der Aufnahmebereich (A) dazu eingerichtet ist, mindestens einen Ableiter (31) von mindestens einem Zellstapel (30), insbesondere in zumindest bereichsweise gefalteter oder gebogener Form, aufzunehmen, wobei der Aufnahmebereich (A) zumindest entlang einer Raumrichtung zumindest bereichsweise durch randseitige Seitenabschnitte (12) begrenzbar ist.

2. Isolationseinheit nach Anspruch 1, wobei die Seitenabschnitte (12) den Aufnahmebereich (A) einseitig oder beidseitig begrenzen und entlang der Längenrichtung (L) von dem Basisabschnitt (11) abstehen.

3. Isolationseinheit nach Anspruch 1 oder 2, wobei die Seitenabschnitte (12) entlang der Tiefenrichtung (T) von dem Basisabschnitt (11) abstehen oder den Basisabschnitt (11) entlang der Tiefenrichtung (T) verlängern, wobei die Seitenabschnitte (12) beweglich mit dem Basisabschnitt (11) verbunden sind.

4. Isolationseinheit nach Anspruch 3, wobei die Seitenabschnitte (12) entlang einer Falz oder Perforierung (16) faltbar mit dem Basisabschnitt (11) verbunden sind, wobei die Seitenabschnitte (12) entlang der Falz oder Perforierung (16) in einem Winkel zwischen 1° und 180° faltbar sind.

5. Isolationseinheit nach einem der Ansprüche 1 bis 4, wobei der Aufnahmebereich (A) entlang der Höhenrichtung (H) randseitig durch mindestens ein Stützelement (13) begrenzt ist, welches sich in Längenrichtung (L) vom Basisabschnitt (11) aus erstreckt.

6. Isolationseinheit nach einem der Ansprüche 1 bis 5, wobei die Seitenabschnitte (12) zumindest an zwei einander gegenüberliegenden Rändern des Basisabschnitts (11) angeordnet sind.

7. Isolationseinheit nach Anspruch 5, wobei die Seitenabschnitte (12) im gefalteten Zustand eine Ausdehnung entlang der Längenrichtung (L) aufweisen, welche einer Ausdehnung des mindestens einen Stützelements (13) in Längenrichtung (L) entspricht oder diese überragt.

8. Isolationseinheit nach einem der Ansprüche 1 bis 7, wobei der Basisabschnitt (11) mindestens eine Öffnung (15) und/oder mindestens eine Vertiefung (17) aufweist, wobei die Vertiefung (17) dazu eingerichtet ist, zumindest bereichsweise eine Kollektorplatte (23) aufzunehmen.

9. Zelldeckelanordnung (20), aufweisend mindestens eine außenseitig angeordnete Terminalplatte (22), eine innenseitig angeordnete Kollektorplatte (23), einen Zelldeckel (21) und eine Isolationseinheit (10) gemäß einem der vorhergehenden Ansprüche, wobei die Kollektorplatte (23) flächig auf einem Basisabschnitt (11) der Isolationseinheit (10) positioniert ist, wobei eine dem Aufnahmeabschnitt (A) entgegen gerichtete Seite des Basisabschnitts (11), insbesondere innenseitig, an dem Zelldeckel (21) angeordnet ist, wobei außenseitig an dem Zelldeckel (21) die Terminalplatte (22) direkt oder indirekt angeordnet ist, wobei die Terminalplatte (22) in Längenrichtung (L) durch den Zelldeckel (21) und die Basiseinheit (11) hindurch elektrisch leitend mit der Kollektorplatte (23) verbunden ist.

10. Zelldeckelanordnung nach Anspruch 9, wobei durch eine elektrisch leitende Verbindung (40) zwischen der Terminalplatte (22) und der Kollektorplatte (23) der Zelldeckel (21) und die Isolationseinheit (10) mechanisch miteinander verpresst sind.

11. Zelldeckelanordnung nach Anspruch 9 oder 10, wobei die Kollektorplatte (23) in einem Aufnahmeabschnitt (A) und/oder einer Vertiefung (17) des Basisabschnitts (11) der Isolationseinheit (10) angeordnet ist, wobei die Kollektorplatte (23) dazu eingerichtet ist, mindestens eine biegbare oder gebogene Ableiterverlängerung oder mindestens ein biegbares oder gebogenes Ableiterbündel elektrisch zu kontaktieren, wobei die Ableiterverlängerung oder das Ableiterbündel in einem gebogenen Zustand innerhalb des Aufnahmeabschnitts (A) der Isolationseinheit (10) angeordnet ist, wobei die Ableiterverlängerung oder das Ableiterbündel entlang eines Biegebereichs (B) biegbar ausgestaltet oder gebogen sind.

12. Zelldeckelanordnung nach Anspruch 11, wobei mindestens ein Seitenabschnitt (12) der Isolationseinheit (10) dazu eingerichtet ist, mindestens einen Biegebereich (B) der Ableiterverlängerung oder des Ableiterbündels innerhalb des Aufnahmeabschnitts (A) zumindest randseitig zu führen.

13. Verfahren (50) zur Herstellen einer Batteriezelle (100) mit mindestens einer Zelldeckelanordnung (20) gemäß einem der Ansprüche 9 bis 12, wobei mindestens ein Zellstapel (30) mit in Längenrichtung (L) endseitig abstehenden Ableitern (31) bereitgestellt wird, wobei die jeweiligen Ableiter (31) mit jeweils mindestens einer Kollektorplatte (23) mindestens einer Zelldeckelanordnung (20) direkt oder indirekt elektrisch leitend verbunden werden, wobei die Ableiter (31) vor oder nach einem Einbringen des Zellstapels (30) in ein Zellgehäuse (110) mit einer Kollektorplatte (23) mindestens einer Zelldeckelanordnung (20) verbunden werden, wobei die mindestens eine Zelldeckelanordnung (20) dazu eingesetzt wird, mindestens eine Öffnung des Zellgehäuses (110) zu verschließen, wobei beim Verschließen der Öffnung des Zellgehäuses (110) die mit den Kollektorplatten (23) verbundenen Ableiter (31) gebogen werden, wobei die Ableiter (31) beim Biegen durch mindestens einen Seitenabschnitt (12) der Isolationseinheit (10) geführt und von dem Zellgehäuse (110) zumindest bereichsweise beabstandet werden.
